(19) Europäisches Patentamt
European Patent Office
Office européen des brevets

(11)     EP 0 828 330 B1

(12)     **EUROPÄISCHE PATENTSCHRIFT**

(45) Veröffentlichungstag und Bekanntmachung des
Hinweises auf die Patenterteilung:
**02.05.2007   Patentblatt 2007/18**

(51) Int Cl.:
*H02H 6/00* (2006.01)     *H02H 7/085* (2006.01)

(21) Anmeldenummer: **97114628.7**

(22) Anmeldetag: **22.08.1997**

(54) **Stellantrieb mit vor Überlastung geschütztem Elektromotor**

Actuator with electric motor protected against overload

Actionneur avec moteur électrique protégé contre surcharges

(84) Benannte Vertragsstaaten:
**DE ES FR IT**

(30) Priorität: **04.09.1996   DE 19635924**

(43) Veröffentlichungstag der Anmeldung:
**11.03.1998   Patentblatt 1998/11**

(73) Patentinhaber: **SIEMENS
AKTIENGESELLSCHAFT
80333 München (DE)**

(72) Erfinder: **Hopfmüller, Gebhard, Dipl.-Ing.
2544 Siebenhaus (AT)**

(56) Entgegenhaltungen:
**WO-A-92/10017          WO-A-93/23904
DE-A- 2 325 767          FR-A- 2 674 702**

**Beschreibung**

Die Erfindung bezieht sich auf einen Stellantrieb mit vor Überlastung geschütztem Elektromotor gemäß Patentanspruch 1; derartige Stellantriebe mit einem aus einer Gleichspannungsbatterie gespeisten Kommutatormotor mit nachgeschaltetem Schneckengetriebe sind insbesondere zum Einsatz für Fensterheber-/Schiebedachantriebe in Kraftfahrzeugen vorgesehen und müssen im Überlastungsfall, insbesondere bei blockiertem Antrieb, geschützt sein.

Üblicherweise erfolgt ein solcher Überlastungsschutz durch einen Thermoschalter, insbesondere in Form eines mechanischen Bimetall-Schalters, der beim Überschreiten eines vorgesehenen Maximalwertes den Motorstrom unterbricht.

Zum Ersatz derartiger mechanischer Bimetall-Schalter ist es durch die DE 42 16 040 A1 schon bekannt, während der Einschaltdauer des Elektromotors dessen Verlustleitung aus der Batteriespannung, der Motordrehzahl und dem Ankerkreiswiderstand aufgrund der Daten im wesentlichen bereits vorhandenen Sensoren zu berechnen und den Elektromotor bei Gefahr einer daraus ableitbaren Überlast abzuschalten; die zu dieser Berechnung u.a. notwendige, an der verlustlos angenommenen Motorwicklung induzierte generatorische Spannung wird aus den Leerlaufgrößen des Elektromotors bestimmt. Ausgehend von einer angenommenen festen Basis-Temperatur wird durch Integration der Verlustleistung über der Zeit die jeweilige Temperatur der Wicklung des Elektromotors bestimmt.

Gemäß Aufgabe vorliegender Erfindung soll eine genauere Anpassung des Abschaltwertes des Elektromotors aufgrund unterschiedlicher Belastungsparameter und unter Ausnutzung der vollen Wärmebelastbarkeit des Elektromotors erreichbar sein.

Die Lösung dieser Aufgabe gelingt durch einen Stellantrieb gemäß Patentanspruch 1; durch die Abhängigkeit des Abschaltwertes von der jeweiligen Umgebungstemperatur ist im Vergleich zu einer von einem vorab definierten konstanten Anfangswert ausgehenden Temperaturberechnung eine der tatsächlichen Belastung genauer entsprechende Wärmebelastungsüberwachung ohne Notwendigkeit von unnötig großen Toleranzbereichen möglich.

Unter Ausnutzung einer bereits vorhandenen elektronischen, mit entsprechender Software bestückten, Steuerschaltung für den Betriebseinsatz des Stellantriebes kann mit geringem Aufwand unter Zugrundelegung bekannter Berechnungsformeln aus der Speisespannung des Elektromotors und vorgegebener weiterer fester Motorparameter wie dem Wicklungswiderstand des Elektromotors, dessen Nennspannung, dessen Leerlaufstrom sowie dessen Leerlaufdrehzahl und unter Hinziehung der aktuellen Motordrehzahl die jeweilige drehzahlabhängige Verlustleistung des Motors direkt ermittelt und bei Erreichen eines vorgegebenen, in der an sich vorhandenen Steuerschaltung abspeicherbaren, Maximalwertes zum überlastungsschützenden Abschalten des Motors benutzt werden.

Ausgehend von einem Ersatzschaltbild, in dem ein Spannungsgleichgewicht zwischen der Speisespannung, d.h. bei Anwendung auf einen Kraftfahrzeug-Stellantrieb im Regelfall der Batteriespannung, U einerseits und dem Spannungsabfall $R_o I_M$ an dem die Wicklungsimpedanz der Motorwicklung repräsentierenden Widerstand $R_o$ sowie der induzierten generatorischen Spannung $U_{EMK}$ an der verlustlos angenommenen Motorwicklung andererseits besteht, ergibt sich diese generatorische Spannung drehzahlabhängig aus den Produkt $U_{EMK} = n \cdot K$ nach der Beziehung $K = -(U_o - I_o R_o)/n_o$ mit $U_o$ = Nennspannung des Elektromotors; $I_o$ = Leerlaufstrom des Elektromotors; $n_o$ = Leerlaufdrehzahl des Elektromotors. Die zu überwachende Verlustleistung $P = (U - U_{EMK})^2/R_o$ läßt sich also auf einfache Weise sowie genau und zuverlässig aus festen Motorparametern sowie aus der jeweiligen aktuellen Drehzahl des Elektromotors sowie aus dessen Speisespannung, insbesondere Batteriespannung, ermitteln.

Nach einer Ausgestaltung der Erfindung ist zur weiteren Verbesserung einer schnell reagierenden antriebsspezifischen Überwachung vorgesehen, nicht den maximalen Wert der Speisespannung als festen Wert sondern einen betriebsmäßig jeweils aktuell gemessenen Wert der Speisespannung der zuvor erläuterten Berechnung und Überwachung der im Blockierfall des Elektromotors in diesem erzeugten Verlustleistung zugrundezulegen.

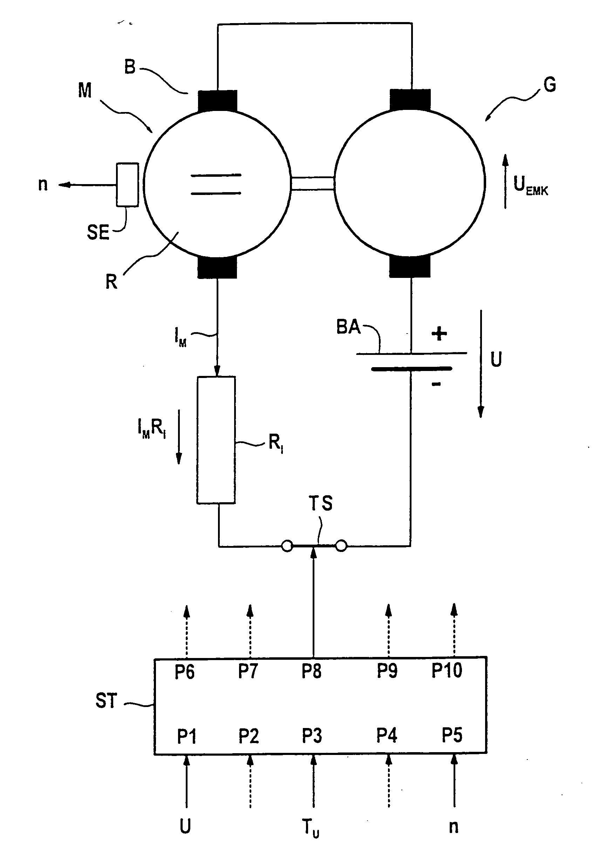

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert.

Die Figur zeigt in schematischer Darstellung als Stellantrieb einen Fensterheberantrieb für ein Kraftfahrzeug. Ein Kommutatormotor M mit einem Rotor R sowie mit Bürsten B wird aus einer Batterie BA gespeist.

Zur betriebsmäßigen Ansteuerung des Stellantriebes dient eine elektronische Steuereinheit ST mit Eingangs-Ports P1-P5 und Ausgangs-Ports P6-P10.

Zur Verdeutlichung der drehzahlabhängigen Überlastungs-Überwachung ist der elektromotorische Antrieb als Ersatzschaltbild mit eingetragenem Spannungsgleichgewicht zwischen der Speisespannung U der Batterie BA einerseits sowie dem Spannungsabfall $I_M R_o$ an der Wicklungsimpedanz $R_o$ sowie der in der verlustlos angenommenen Motorwicklung induzierten generatorischen Spannung $U_{EMK}$ andererseits dargestellt; lediglich zur Verdeutlichung der Entstehung der generatorischen Spannung $U_{EMK}$ ist der motorische Teil des Stellantriebes - unter Weglassung eines nachgeschalteten Getriebes - auch in seiner "induzierenden Generatorwirkung G" dargestellt.

Vom Rotor wird - z.B. mittels eines mitrotierenden Polrades - ein Drehzahl-Sensor SE, insbesondere ein Hallwandler, aktiviert, dessen Ausgangssignal für die Drehzahl n an einem Eingangs-Port P5 der Steuereinheit ST anliegt; an einem weiteren Eingangs-Port P1 liegt die Speisespannung U der Batterie BA.

Aufgrund der beiden vorgegebenen Werte kann in der Steuereinheit ST mittels weiterer abgelegter fester Stellantriebsparameter wie der Nennspannung $U_o$, dem Leerlaufstrom $I_o$ sowie der Leerlaufdrehzahl $n_o$ des Elektromotors M die jeweils zu überwachende drehzahlabhängige Verlust-Motorleistung P gemäß folgenden Vorgaben bestimmt werden:

$$P = (U - U_{EMK})^2/R_o$$

$$U_{EMK} = n \cdot K$$

$$K = (U_o - I_o R_o)/n_o$$

In besonders einfacher Weise kann für die Bestimmung der Verlust-Motorleistung P von einem festen Wert der Batteriespannung in Form ihres Nenn- bzw. Maximalwertes $U_{max}$ ausgegangen werden; zur weiteren Erhöhung der Empfindlichkeit der erfindungsgemäßen Überlastungs-Überwachung ist nach einer Ausgestaltung der Erfindung vorgesehen, einen während der Betriebszeit jeweils aktualisierten Wert der Batteriespannung U zugrundezulegen.

Erreicht bzw. überschreitet die überwachte Motorleistung P einen vorgegebenen, zweckmäßigerweise in der Steuereinheit ST abgespeicherten Maximalwert, wird über einen Ausgangs-Port P8 der Steuereinheit ST ein Schaltbefehl an einen Trennschalter TS gegeben, der den Motor-Stromkreis unterbricht.

Nach einer Ausgestaltung der Erfindung ist vorgesehen, den jeweils unterbrechungsrelevanten Maximalwert, bei dem der Trennschalter TS anspricht, in Abhängigkeit von einer maximalen Motortemperatur unter Berücksichtigung der jeweiligen Umgebungstemperatur des Elektromotors zu stellen; die jeweils maßgebliche fortlaufend, nach einem Zeitraum dt gegenüber der zuvor bestimmten Motortemperatur $T_n$, aktualisierte Motortemperatur $T_{n+1}$ ergibt sich aus der vorherigen Motortemperatur $T_n$ unter Berücksichtigung der jeweils aktuellen Verlust-Motorleistung und der jeweils aktuellen, z.B. an einem Eingangs-Port P3 der Steuereinrihtung ST anliegenden, gemessenen Umgebungstemperatur $T_u$, sowie von festen, in der Steuereinrichtung abgelegten Parametern wie der thermischen Kapazität $C_W$ des Elektromotors M sowie des Wärmewiderstandes $R_{th}$ zwischen dem Elektromotor M und seiner Umgebung gemäß der Beziehung:

$$T_{n+1} = T_n + dt \cdot P/c_W - dt \cdot (T_n - T_U)/(c_w \cdot R_{th})$$

Die jeweils aktuelle Temperatur $T_{n+1}$ des Elektromotors M wird zweckmäßigerweise mit einer ersten Grenzwerttemperatur $T_{1max}$ und einer zweiten Grenzwerttemperatur $T_{2max}$ derart verglichen, daß bis zum Erreichen der ersten Grenzwerttemperatur zwar die gerade aktivierte Bewegung des Stellantriebes noch weitergeführt jedoch eine neue Stellbetätigung unterdrückt wird und bei Erreichen bzw. Überschreiten der zweiten, höheren Grenzwerttemperatur der Elektromotor über den Trennschalter TS abgeschaltet wird.

**Patentansprüche**

1.  Stellantrieb mit vor Überlastung geschütztem Elektromotor, insbesondere Fensterheber- bzw. Schiebedachantrieb für ein Kraftfahrzeug, beinhaltend Mittel mit folgender Funktion

    - mit einem Überlastungsschutz des Elektromotors (M) in Abhängigkeit von der in der Wicklungsimpedanz ($R_i$) des Elektromotors (M) betriebsmäßig erzeugten, mittels der jeweiligen Motordrehzahl (n) sowie der Speisespannung (U) des Elektromotors bestimmten Verlust-Wärmeleistung (P);
    - mit aus der Wicklungsimpedanz ($R_o$) des Elektromotors (M) sowie dessen Speisespannung (U) unter Berücksichtigung der an der verlustlos angenommenen Motorwicklung induzierten generatorischen Spannung ($U_{EMK}$) des Elektromotors (M) gemäß $P = (U - U_{EMK})^2/R_o$ bestimmten Verlust-Wärmeleistung (P) mit $U_{EMK} = n \cdot K$, wobei n = jeweilige Motordrehzahl und K = eine Motorkonstante bedeuten, die gemäß der Beziehung $K = (U_o - I_o R_o)/n_o$ mit $U_o$ = Nennspannung des Elektromotors; $I_o$ = Leerlaufstrom des Elektromotors; $n_o$ = Leerlaufdrehzahl

des Elektromotors bestimmt ist;

- mit einer die Überlastung des Elektromotors (M) erfassenden bzw. den Elektromotor (M) bei Überlastung abschaltenden Überwachungsvorrichtung;

- mit einer elektronischen Überwachungsvorrichtung mit einer elektronischen Speicherung eines Abschaltwertes bei Erreichen eines definierten Maximalwertes der Verlust-Wärmebelastung des Elektromotors (M); **dadurch gekennzeichnet, daß** die Mittel einen von der jeweiligen Umgebungstemperatur des Elektromotors abhängigen Abschaltwert bilden.

**2.** Stellantrieb nach Anspruch 1

mit einer Erfassung der Drehzahl (n) des Elektromotors (M) durch zumindest einen an sich vorhandenen, insbesondere für einen Blockier- und/oder Einklemmschutz vorgesehenen, Drehzahlsensor (SE).

**3.** Stellantrieb nach Anspruch 1 und/oder 2

- mit einem jeweils aktuell gemessenen Wert der Speisespannung (U), insbesondere einer Kraftfahrzeug-Batteriespannung.

**4.** Stellantrieb nach zumindest einem der Ansprüche 1-3

- mit einem festen Wert der Speisespannung (U), insbesondere einer Kraftfahrzeug-Batteriespannung.

**5.** Stellantrieb nach Anspruch 4

- mit einem der Maximalspannung ($U_o$) entsprechenden festen Wert der Speisespannung (U).

**6.** Stellantrieb nach zumindest einem der vorhergehenden Ansprüche 1-5

- mit einer als Überwachungsvorrichtung mitbenutzten, an sich vorhandenen Steuervorrichtung (ST) für den Stellantrieb.

**7.** Stellantrieb nach zumindest einem der vorhergehenden Ansprüche 1-6

- mit einer abschaltenden Überwachungsvorrichtung in Abhängigkeit von einer aufgrund der jeweils bestimmten Wärmeleistung (P) errechneten aktuellen Motortemperatur ($T_{n+1}$) sowie aufgrund der jeweiligen Umgebungstemperatur ($T_U$) gemäß der Beziehung:

$$T_{n+1} = T_n + dt \cdot P/c_W - dt \cdot (T_n - T_U)/(c_w \cdot R_{th})$$

dabei bedeuten:

$T_n$ = Motortemperatur gemäß vorheriger Messung;
dt = Zeitabstand zur vorherigen Temperaturbestimmung;
P = errechnete Verlustleistung des Elektromotors;
$C_W$ = thermische Kapazität des Elektromotors;
$T_U$ = Umgebungstemperatur des Elektromotors;
$R_{th}$ = Wärmewiderstand zwischen Elektromotor und Umgebung.

**8.** Stellantrieb nach Anspruch 7

- mit einer den Elektromotor (M) an einer weiteren Stellbefehländerung hindernden Überwachungsvorrichtung bei Erreichen einer ersten Grenzwerttemperatur ($T_{1max}$);

- mit einer den Elektromotor (M) abschaltenden Überwachungsvorrichtung bei Erreichen einer zweiten, gegenüber der ersten Grenzwerttemperatur erhöhten Grenzwerttemperatur ($T_{2max}$).

**Claims**

1. Actuator with an electric motor protected against overload, in particular a window lifting or sunroof drive system for a motor vehicle, containing means with the following function

   - with an overload protection system for the electric motor (M) as a function of the thermal output loss (P) generated in the winding impedance ($R_i$) of the electric motor (M) during operation and determined by means of the respective motor speed (n) and the supply voltage (U) of the electric motor;
   - with a thermal output loss (P) of $U_{EMK}$ = n.K, determined from the winding impedance ($R_o$) of the electric motor (M) and its supply voltage (U) taking into account the generative voltage ($U_{EMK}$) of the electric motor (M) induced at the motor winding, which is assumed to be loss-free, according to P = (U - $U_{EMK}$)$^2$/$R_o$, where n = the respective motor speed and K = a motor constant, which is determined according to the equation K = ($U_o$ - $I_o R_o$)/$n_o$, where $U_o$ = nominal voltage of the electric motor; $I_o$ = idle current of the electric motor; $n_o$ = idle speed of the electric motor
   - with a monitoring device detecting the overload of the electric motor (M) and/or disconnecting the electric motor (M) when overload occurs;
   - with an electronic monitoring device with an electronic memory for a disconnection value when a defined maximum value of the thermal load loss of the electric motor (M) is reached; **characterised in that** the means form a disconnection value, which is a function of the respective ambient temperature of the electric motor.

2. Actuator according to claim 1,
   with the speed (n) of the electric motor (M) being detected by at least one speed sensor (SE) that is present per se and is provided in particular for a stall and/or anti-trap protection system.

3. Actuator according to claim 1 and/or 2,

   - with a currently measured value in each instance for the supply voltage (U), in particular for a motor vehicle battery voltage.

4. Actuator according to at least one of claims 1-3,

   - with a fixed value for the supply voltage (U), in particular a motor vehicle battery voltage.

5. Actuator according to claim 4,

   - with a fixed value for the supply voltage (U) corresponding to the maximum voltage ($U_o$).

6. Actuator according to at least one of the preceding claims 1-5,

   - with a control device (ST) for the actuator that is present per se and is also used as a monitoring device.

7. Actuator according to at least one of the preceding claims 1-6,

   - with a disconnecting monitoring device as a function of a current motor temperature ($T_{n+1}$) calculated on the basis of the respectively determined thermal output (P) and on the basis of the respective ambient temperature ($T_U$) according to the equation:

$$T_{n+1} = T_n + dt.P/c_w - dt.(T_n - T_U)/(c_w.R_{th})$$

   where

   $T_n$ = motor temperature according to a previous measurement;
   dt = time interval from previous temperature determination;
   P = calculated output loss of electric motor;
   $C_w$ = thermal capacity of electric motor

$T_U$ = ambient temperature of electric motor;
$R_{th}$ = thermal resistance between electric motor and surroundings

8. Actuator according to claim 7

   - with a monitoring device preventing the electric motor (M) from changing the actuation command further, when a first limit value temperature ($T_{1max}$) is reached;
   - with a monitoring device disconnecting the electric motor (M) when a second limit value temperature ($T_{2max}$) is reached, which is higher than the first limit value temperature.

**Revendications**

1. Servomoteur comprenant un moteur électrique protégé contre la surcharge, en particulier entraînement de lève-vitre ou de toit ouvrant, qui comprend des moyens ayant la fonction suivante :

   - une protection de surcharge de moteur électrique (M) en fonction de la puissance dissipée thermique (P) produite en service dans l'impédance d'enroulement ($R_i$) du moteur électrique (M) et déterminée au moyen du nombre de tours (n) du moteur au moment considéré, ainsi que de la tension d'alimentation (U) du moteur électrique ;
   - une puissance dissipée thermique (P) déterminée sur la base de l'impédance d'enroulement ($R_o$) du moteur électrique (M) ainsi que de sa tension d'alimentation (U), en tenant compte de la tension de générateur ($U_{EMK}$) du moteur électrique (M) induite sur l'enroulement du moteur supposé sans perte, en appliquant l'équation $P = (U - U_{EMK})^2 / R_o$, où $U_{EMK} = n \cdot K$, avec $\underline{n}$ = nombre de tours du moteur au moment considéré et K = une constante du moteur qui est déterminée par la relation $K = (U_o - I_o R_o) / n_o$ où $U_o$ = tension nominale du moteur électrique ; $I_o$ = courant à vide du moteur électrique ; $n_o$ = nombre de tours à vide du moteur électrique ;
   - un dispositif de surveillance qui détecte la surcharge du moteur électrique (M) ou déconnecte le moteur électrique (M) en cas de surcharge ;
   - un dispositif de surveillance électronique comportant un enregistrement électronique d'un point de déconnexion lorsqu'une valeur maximale définie de la charge dissipée thermique du moteur électrique (M) est atteinte ;
   - **caractérisé en ce que** les moyens forment un point de déconnexion fonction de la température de l'environnement du moteur électrique au moment considéré.

2. Servomoteur selon la revendication 1,
   comprenant une saisie du nombre de tours (n) du moteur électrique (M), exécutée par un capteur de nombre de tours (SE), présent en soi, prévu en particulier pour une protection antiblocage et/ou anticoincement.

3. Servomoteur selon la revendication 1 et/ou 2,

   - comprenant une valeur mesurée actuelle de la tension d'alimentation (U), en particulier d'une tension d'accumulateur du véhicule automobile.

4. Servomoteur selon au moins une des revendications 1-3,

   - possédant une valeur fixe de la tension d'alimentation (U), en particulier d'une tension d'accumulateur d'un véhicule automobile.

5. Servomoteur selon la revendication 4,

   - possédant une valeur fixe de la tension d'alimentation (U) qui correspond à la tension maximale ($U_o$).

6. Servomoteur selon au moins une des revendications précédentes 1-5,

   - comprenant un dispositif de commande (ST) pour le servomoteur qui est présent en soi, et qui est utilisé en même temps comme dispositif de surveillance.

7. Servomoteur selon au moins une des revendications précédentes 1-6,

- comprenant un dispositif de surveillance exécutant la déconnexion qui opère en fonction d'une température actuelle ($T_{n+1}$) du moteur calculée sur la base de la puissance thermique (P) déterminée au moment considéré, ainsi que sur la base de la température de l'environnement ($T_U$) au moment considéré, en appliquant la relation :

$$T_{n+1} = T_n + dt \cdot P/c_W - dt \cdot (T_n - T_U)/(c_W \cdot R_{th})$$

dans laquelle :

$T_n$ = température du moteur donnée par la mesure précédente;
dt = laps de temps séparant de la détermination de température précédente ;
P = puissance dissipée calculée du moteur électrique ;
$C_W$ = capacité thermique du moteur électrique ;
$T_U$ = température de l'environnement du moteur électrique ;
$R_{th}$ = résistance thermique entre le moteur électrique et l'environnement.

8. Servomoteur selon la revendication 7, comprenant

- un dispositif de surveillance de surcharge qui inhibe toute nouvelle modification de l'ordre de réglage du moteur électrique (M) lorsqu'une première température limite ($T_{1max}$) est atteinte ;
- un dispositif de surveillance de surcharge qui déconnecte le moteur électrique (M) lorsqu'une deuxième température limite ($T_{2max}$) plus élevée que la première température limite est atteinte.